# EUROPEAN PATENT SPECIFICATION

(11) **EP 4 447 211 B1**
(45) Date of publication and mention of the grant of the patent: **30.09.2026**
(21) Application number: 23855050.3
(22) Date of filing: 17.07.2023
(51) Int. Cl.: H01M 50/204, H01M 50/24, H01M 10/42, H01M 50/251, A62C 3/16

(54) **BATTERY RACK AND ELECTRIC POWER STORAGE SYSTEM INCLUDING SAME**
BATTERIEGESTELL UND ELEKTRISCHES ENERGIESPEICHERSYSTEM DAMIT
BÂTI DE BATTERIE ET SYSTÈME DE STOCKAGE D'ÉNERGIE ÉLECTRIQUE LE COMPRENANT

(30) Priority: 16.08.2022 KR 20220102009
(43) Date of publication of application: 16.10.2024
(73) Proprietor: LG Energy Solution, Ltd., Seoul 07335 (KR)
(72) Inventor: LEE, Seung-Jun, Daejeon 34122 (KR); KIM, Hee-Chan, Daejeon 34122 (KR); SON, Kown, Daejeon 34122 (KR); JUNG, Goan-Su, Daejeon 34122 (KR); PARK, Jung-Beom, Daejeon 34122 (KR); CHOI, Byung-Hyuk, Daejeon 34122 (KR)
(74) Representative: BCKIP Part mbB
(86) International application number: PCT/KR2023/010224
(87) International publication number: WO 2024/039079

(56) References cited:
- CN-U- 209 544 545
- KR-A- 20210 056 268
- KR-A- 20210 056 268
- KR-A- 20220 045 556
- KR-A- 20220 045 556
- KR-A- 20220 051 890
- KR-A- 20220 051 890
- KR-B1- 101 720 278

## Description

### TECHNICAL FIELD OF THE INVENTION

The present invention relates to a battery rack and an electric power storage system including the same, and more specifically, to a battery rack capable of effectively controlling thermal events and an electric power storage system including the same.

### BACKGROUND ART

Secondary batteries, which are easy to apply depending on the product group and have electrical characteristics such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency in that they have the primary advantage of being able to dramatically reduce the use of fossil fuels and in that no by-product is generated due to energy use.

Types of current secondary batteries widely used include lithium ion batteries, lithium polymer batteries, nickel cadmium batteries, nickel hydrogen batteries, nickel zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, in the case of configuring a battery pack by connecting a plurality of battery cells in series/parallel, a common method is to preferentially configure a battery module including at least one battery cell and then add other components using the at least one battery module, thereby configuring a battery pack or battery rack. Meanwhile, an electric power storage system is configured as an energy source by providing at least one battery rack described above.

In the case of the battery rack, an abnormality such as a short circuit may occur in some battery cells of a plurality of battery modules and the temperature of the battery cells may continue to increase and exceed a critical temperature according thereto, resulting in a thermal event. If a thermal event occurs in some battery cells as described above, safety issues may arise.

To solve this problem, conventionally, a water injection system is configured adjacent to the battery rack so as to control thermal events generated in the battery module.

However, since this conventional water injection system sprays a fire extinguishing agent over a wide area of the battery rack, it is difficult to quickly and effectively control the aforementioned thermal events.

KR 20220045556 A discloses a battery rack including a plurality of battery modules arranged in layers, a rack case configured to receive the plurality of battery modules, an extinguishing agent supply member configured to transport an extinguishing agent and having a supply pipe extending along the plurality of battery modules, and a plurality of valves provided at one end connected to the supply pipe and the other end connected from the supply pipe to each of the plurality of battery modules.

KR 20210056268 A discloses a battery rack including a plurality of battery modules including battery cells, a rack case accommodating the plurality of battery modules, a fire extinguishing water supply unit connected to the plurality of battery modules, and a bracket unit covering the fire extinguishing water supply unit, which is arranged at the rear of the rack case.

KR 20220051890 A discloses a battery rack comprising a plurality of battery modules, at least one rack case configured to accommodate the plurality of battery modules, a main body portion having an inlet for injecting a fire extinguishing agent and extending along an arrangement of the plurality of battery modules, an injection pipe having a distribution portion extending from the main body portion toward each of the plurality of battery modules and having an outlet inserted into each of the plurality of battery modules, and a flexible pipe having a first coupler positioned at one end of the pipe and configured to be connectable to a supply pipe supplying a fire extinguishing agent, and a second coupler positioned at the other end of the pipe and configured to be connectable to an inlet of the injection pipe, and configured to be bendable.

### DISCLOSURE OF THE INVENTION

### Technical Problem

The present invention has been designed to solve the problems of the related art, and therefore it is an object of the present invention is to provide a battery rack capable of effectively controlling thermal events and an electric power storage system including the same.

However, the technical problems to be solved by the present invention are not limited to the above-mentioned problems, and other problems not mentioned will be clearly understood by those skilled in the art from the description of the invention below.

### Technical Solution

To solve the above problem, the present invention provides a battery rack in accordance with claim 1 and an electric power storage system according to claim 11.

According to the present invention, there is provided a battery rack including a battery module, a rack frame accommodating the battery module, a fire extinguishing agent supply module disposed on one side of the rack frame and connected to the battery module, and a support module coupled to the one side of the rack frame and configured to support the fire extinguishing agent supply module such that the fire extinguishing agent supply module faces the battery module.

According to the present invention, the fire extinguishing agent supply module includes a nozzle connected to the battery module, and a fire extinguishing pipe coupled to the support module and connected to the nozzle to supply a fire extinguishing agent to the nozzle, and the support module includes a pipe support portion configured to support the fire extinguishing pipe and configured to surround the remaining outer surfaces of the fire extinguishing pipe or some of the remaining outer surfaces of the fire extinguishing pipe, excluding a side surface of the fire extinguishing pipe which faces the battery module and on which the nozzle is provided, and a frame coupling portion extending from one side of the pipe support portion so as to face the one side of the rack frame and coupled to the one side of the rack frame.

In an embodiment, the frame coupling portion may be configured to come into surface contact with the one side of the rack frame.

In an embodiment, the frame coupling portion may be formed to extend in the up-and-down direction and may be configured such that the upper and lower ends thereof are coupled to the one side of the rack frame.

According to the present invention, the pipe support portion may be configured to surround at least a portion of the fire extinguishing pipe.

In an embodiment, the rack frame may include a rigid reinforcement portion provided on the one side of the rack frame so as to reinforce the rigidity of the rack frame, and the fire extinguishing pipe may include a fixing member protruding from a side surface of the fire extinguishing pipe facing the battery module and configured to fix the fire extinguishing pipe to the rigid reinforcement portion.

In an embodiment, the frame coupling portion may include a recessed portion partially recessed to correspond to the height of the rigid reinforcement portion.

In an embodiment, the nozzle facing the rigid reinforcement portion may be configured to be connected to the battery module by passing through the rigid reinforcement portion.

In an embodiment, a plurality of battery modules may be provided, a plurality of nozzles may be provided, and the plurality of nozzles may be configured to respectively correspond to the plurality of battery modules.

In an embodiment, a plurality of battery modules may be provided, at least one rack frame may be provided, at least one fire extinguishing agent supply module and at least one support module may be provided to correspond to the at least one rack frame, and the battery rack may further include a pipe connection member configured to adjust the position of the fire extinguishing agent supply module to correspond to the height of the rack frame when the support module is coupled to the rack frame.

In an embodiment, the pipe connection member may include a fire extinguishing pipe connection member configured to connect different fire extinguishing agent supply modules disposed on one sides of respective rack frames, and the fire extinguishing pipe connection member may be configured to be adjustable in the degree of bending to correspond to the height of the rack frame when the support module is coupled to the rack frame.

In an embodiment, the pipe connection member may further include a supply pipe connection member configured to connect a supply pipe that supplies a fire extinguishing agent to the fire extinguishing agent supply module from the outside and the fire extinguishing agent supply module, and a discharge pipe connection member configured to connect a discharge pipe that receives a fire extinguishing agent from the fire extinguishing agent supply module and discharges the same to the outside and the fire extinguishing agent supply module, and at least one of the supply pipe connection member and the discharge pipe connection member may be configured to be adjustable in the degree of bending to correspond to the height of the rack frame when the support module is coupled to the rack frame.

In addition, an electric power storage system according to the present invention includes at least one battery rack according to an embodiment of the present invention described above.

### Advantageous Effects

According to the present invention, the fire extinguishing agent is able to be discharged directly into a battery module, so the thermal event of the battery module may be quickly suppressed.

In addition, the connection between a battery module and a fire extinguishing agent supply module may be easily made, enabling more stable spray of the fire extinguishing agent.

Additionally, even when strong vibrations are applied to the entire battery rack due to natural disasters such as earthquakes or typhoons, the fire extinguishing agent supply module is ensured to withstand such vibrations, so that stable control of thermal events may be possible.

In addition, various other effects may be obtained by various embodiments of the present invention. These various effects of the present invention will be described in detail in each embodiment, or descriptions of effects that may be easily understood by those skilled in the art will be omitted.

### DESCRIPTION OF DRAWINGS

The accompanying drawings illustrate the present invention and, together with the detailed description of the invention below, serve to provide further understanding of the technical features of the present invention, and thus, the present invention is not construed as being limited to the drawings.
FIG. 1 is a diagram illustrating a battery rack according to an embodiment of the present invention.
FIG. 2 is a rear view of the battery rack in FIG. 1.
FIG. 3 is a diagram illustrating a battery module provided in the battery rack in FIG. 1.
FIGS. 4 to 6 are diagrams illustrating the coupling relationship between a fire extinguishing agent supply module and a support module provided in the battery rack in FIG. 1.
FIG. 7 is an enlarged view of part A in FIG. 1.
FIG. 8 is a diagram illustrating the coupling relationship between a rigid reinforcement portion and a fire extinguishing agent supply module provided in the battery rack in FIG. 1.
FIG. 9 is a diagram illustrating the coupling relationship between a fire extinguishing agent supply module and a pipe connection member provided in the battery rack in FIG. 1.
FIG. 10 is a diagram illustrating a battery rack according to another embodiment of the present invention.
FIG. 11 is a diagram illustrating a battery rack according to another embodiment of the present invention.
FIG. 12 is a diagram illustrating an electric power storage system according to an embodiment of the present invention.

### DETAILED DESCRIPTION OF EMBODIMENTS OF THE INVENTION

Hereinafter, preferred embodiments of the present invention will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

Therefore, the configuration proposed in the embodiments and drawings herein is just a preferable example of the present invention and does not indicate the entirety of the technical concept of the present invention.

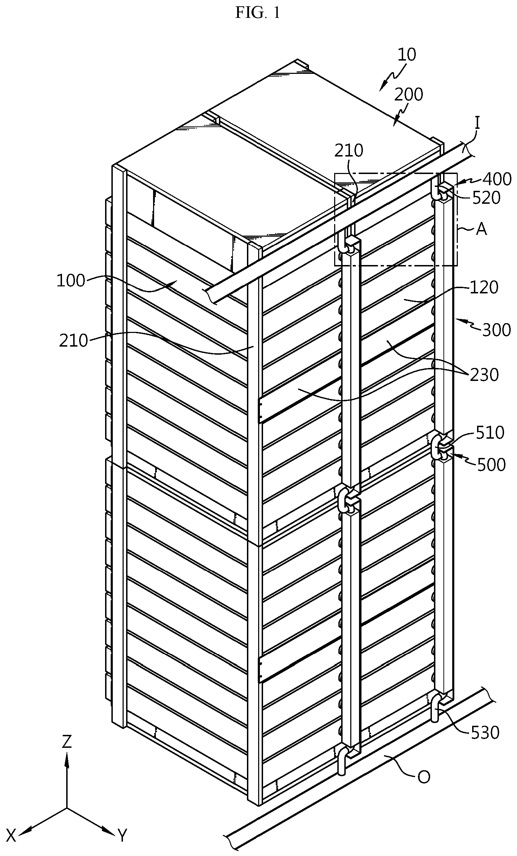

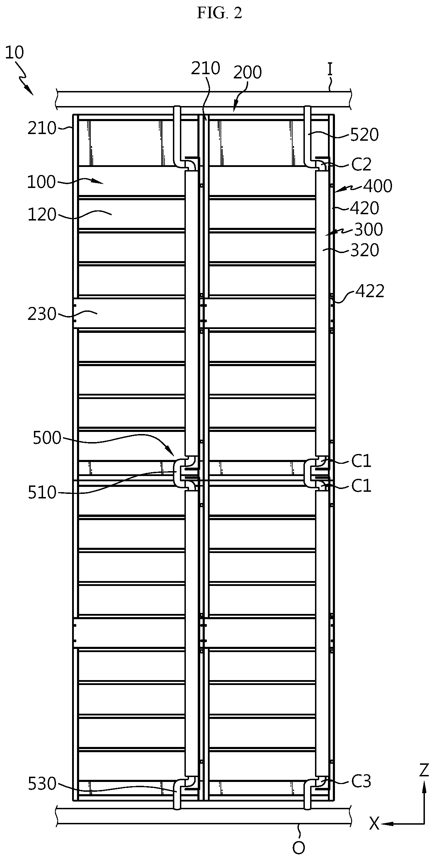

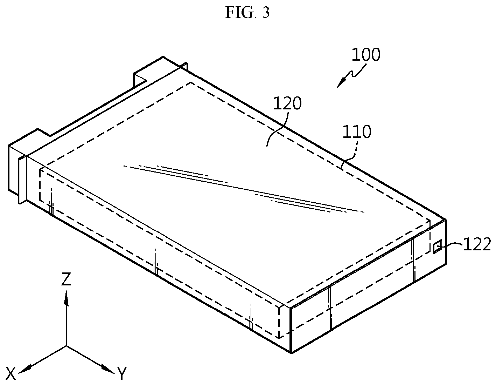

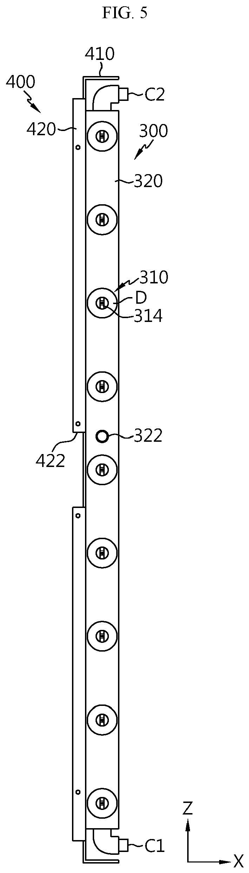

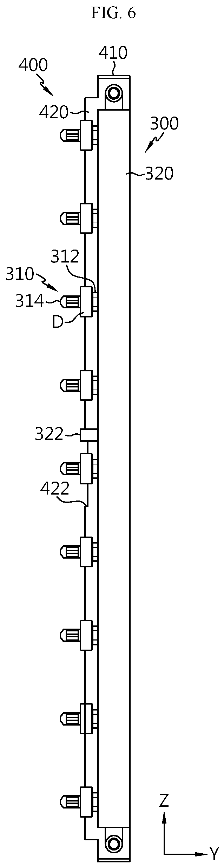

FIG. 1 is a diagram illustrating a battery rack 10 according to an embodiment of the present invention, FIG. 2 is a rear view of the battery rack 10 in FIG. 1, FIG. 3 is a diagram illustrating a battery module 100 provided in the battery rack 10 in FIG. 1, and FIGS. 4 to 6 are diagrams illustrating the coupling relationship between a fire extinguishing agent supply module 300 and a support module 400 provided in the battery rack 10 in FIG. 1.

In an embodiment of the present invention, the X-axis direction shown in the drawing may refer to the left-and-right direction, the Y-axis direction may refer to the front-and-back direction perpendicular to the left-and-right direction on the horizontal plane (XY plane), and the Z-axis direction may refer to the up-and-down direction perpendicular to both the X-axis direction and the Y-axis direction.

Referring to FIGS. 1 to 6, a battery rack 10 according to an embodiment of the present invention includes a battery module 100, a rack frame 200, a fire extinguishing agent supply module 300, and a support module 400.

The battery module 100 may include a cell assembly 110 and a module case 120.

The cell assembly 110 may include at least one battery cell. Here, the battery cell may refer to a secondary battery. This battery cell may be configured as a pouch-type battery cell, a cylindrical battery cell, or a square-shaped battery cell. For example, the battery cell may be a pouch-type battery cell.

The module case 120 may accommodate the cell assembly 110 therein. To this end, the module case 120 may have an internal accommodation space formed therein to accommodate the cell assembly 110.

The rack frame 200 accommodates the battery module 100 therein. To this end, the rack frame 200 may include an internal accommodation space for accommodating the battery module 100 therein.

This rack frame 200 may include a main frame 210.

The main frame 210 may be formed to extend in the up-and-down direction. This main frame 210 may be configured in a pillar shape. This main frame 210 may form an accommodating space capable of accommodating the battery modules 100 inside the rack frame 200. Although not shown in detail, the rack frame 200 may further include a horizontal plate (not shown) connected to the main frame 210 and disposed in the horizontal direction. In this case, the battery module 100 may be placed on the horizontal plate and received inside the rack frame 200.

The fire extinguishing agent supply module 300 is disposed on one side of the rack frame 200 (e.g., the rear side of the rack frame 200). In addition, the fire extinguishing agent supply module 300 is connected to the battery module 100.

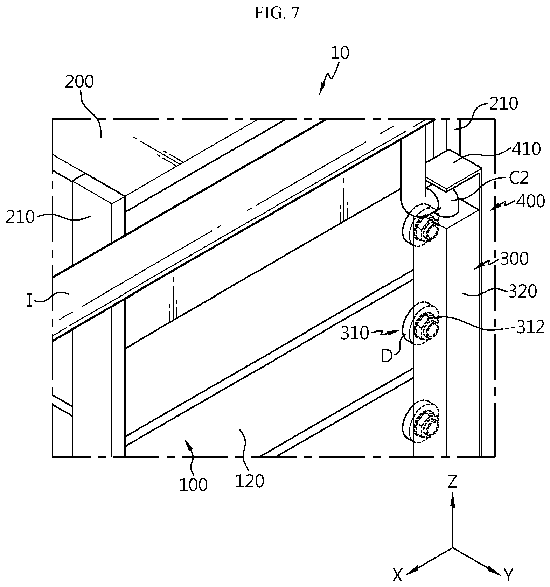

Specifically, this fire extinguishing agent supply module 300 may be connected to the module case 120 of the battery module 100 (see FIG. 7). In addition, the fire extinguishing agent supply module 300 may receive a fire extinguishing agent from an external fire extinguishing agent supply tank (not shown) and spray the same on the cell assembly 110 inside the module case 120. For example, the fire extinguishing agent may be a liquid, more specifically water, but is not limited thereto.

The support module 400 supports the fire extinguishing agent supply module 300. For example, the fire extinguishing agent supply module 300 may be bolted to the support module 400, but is not limited to this coupling method.

This support module 400 is coupled to one side of the rack frame 200 such that the fire extinguishing agent supply module 300 faces the battery module 100. Specifically, the support module 400 may be coupled to the main frame 210 described above. For example, the support module 400 may be bolted to the rack frame 200 but is not limited to this coupling method.

According to this implemented configuration of the present invention, since the fire extinguishing agent is discharged directly into the battery module 100, when a thermal event occurs in the battery module 100, the thermal event is able to be quickly suppressed.

In addition, since the support module 400 is coupled to one side of the rack frame 200 such that the fire extinguishing agent supply module 300 faces the battery module 100, the coupling between the battery module 100 and the fire extinguishing agent supply module 300 may be easily performed, enabling more stable spraying of the fire extinguishing agent.

In addition, by directly connecting the support module 400 that supports the fire extinguishing agent supply module 300 to the rack frame 200, even when strong vibrations are applied to the entire battery rack 10 due to natural disasters such as earthquakes or typhoons, the fire extinguishing agent supply module 300 is able to withstand such vibrations. Therefore, more stable control of thermal events may be possible.

FIG. 7 is an enlarged view of part A in FIG. 1. In this case, a pipe connection member 500, which will be described later, will be omitted from FIG. 7.

Referring to FIGS. 1, 2, and 4 to 7, the fire extinguishing agent supply module 300 may include a nozzle 310 and a fire extinguishing pipe 320.

The nozzle 310 is connected to the battery module 100. In this case, the nozzle 310 may be connected to the module case 120 of the battery module 100. Specifically, a nozzle insertion hole 122 may be formed in the module case 120 of the battery module 100, as shown in FIG. 3. This nozzle insertion hole 122 may be provided in the module case 120 to have a predetermined area such that the nozzle 310 may be inserted into the module case 120.

At least a portion of the nozzle 310 may be inserted into the module case 120 through the nozzle insertion hole 122. This nozzle 310 may receive a fire extinguishing agent from the fire extinguishing agent supply tank described above and spray the same on the cell assembly 110 inside the module case 120.

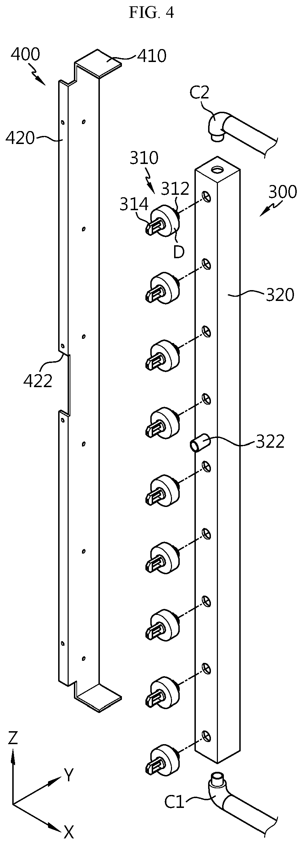

In addition, the nozzle 310 may include a nozzle body 312 and a nozzle head 314 as shown in FIGS. 4 to 7.

The nozzle body 312 may be formed in a substantially cylindrical shape. In addition, a fire extinguishing agent discharge path may be provided in a hollow form inside the nozzle body 312.

The nozzle head 314 may be connected to the nozzle body 312 and inserted into the module case 120 through the nozzle insertion hole 122 of the module case 120.

In addition, the nozzle head 314 may be configured as, for example, a glass bulb. The nozzle head 314 configured as the glass bulb may be configured to block the fire extinguishing agent discharge path inside the nozzle body 312 at ordinary times and break when a thermal event such as thermal runaway of the cell assembly 110 occurs to discharge the fire extinguishing agent into the module case 120. For example, the glass bulb may contain a predetermined liquid (e.g., water) therein. This glass bulb may be configured to break due to volume expansion of the predetermined liquid when the temperature inside the module case 120 rises to a predetermined temperature or more due to thermal runaway of the cell assembly 110.

Alternatively, the nozzle head 314 may include a separate on-off valve. The on-off valve of the nozzle head 314 may be provided on the nozzle head 314 along with a temperature sensor that detects the temperature inside the module case 120. Accordingly, the on-off valve may be configured to close the fire extinguishing agent discharge path in the nozzle body 312 at ordinary times and open the fire extinguishing agent discharge path when thermal runaway of the cell assembly 110 occurs, so that the nozzle head 314 may discharge the fire extinguishing agent into the module case 120. For example, if the temperature sensor detects that the temperature inside the module case 120 rises to a predetermined temperature or more due to the thermal runaway of the cell assembly 110, the on-off valve may open the fire extinguishing agent discharge path.

The fire extinguishing pipe 320 is coupled to the support module 400 and connected to the nozzle 310 so as to supply the fire extinguishing agent to the nozzle 310.

Specifically, the fire extinguishing pipe 320 may be connected to the nozzle body 312, thereby supplying the fire extinguishing agent to the nozzle head 314. In this case, the fire extinguishing pipe 320 may be connected to the fire extinguishing agent discharge path inside the nozzle body 312. In particular, as shown in FIG. 4, a hole may be formed in the fire extinguishing pipe 320 so as to communicate with the fire extinguishing agent discharge path inside the nozzle body 312.

In addition, the fire extinguishing pipe 320 may be connected to an external fire extinguishing agent supply tank so as to receive the fire extinguishing agent. For example, the fire extinguishing pipe 320 may be an extruded pipe formed by extrusion as a single piece, but is not limited thereto.

Additionally, the fire extinguishing agent supply module 300 may further include a leak prevention member D. The leak prevention member D may be provided on the outer peripheral surface of the nozzle body 312 described above. For example, the leak prevention member D may be silicon foam, but is not limited thereto, and any material with good cushioning and compressibility may be applied thereto. For example, the leak prevention member D may be made of a material such as rubber, sponge, or the like.

As shown in FIG. 7, this leak prevention member D may come into close contact with the outer surface of the module case 120 when the nozzle 310 is connected to the battery module 100. Accordingly, when the fire extinguishing agent is discharged from the nozzle 310, the impact applied to the nozzle 310 and the battery module 100 may be alleviated. In addition, when the fire extinguishing agent is discharged from the nozzle 310, it is possible to prevent the fire extinguishing agent from leaking out of the battery module 100 through the gap between the nozzle 310 and the battery module 100.

In addition, as shown in FIGS. 1, 2, and 4 to 7, the support module 400 may include a pipe support portion 410 and a frame coupling portion 420.

The pipe support portion 410 supports the fire extinguishing pipe 320. This pipe support portion 410 may be formed in a plate shape.

The frame coupling portion 420 may be configured to extend from one side of the pipe support portion 410 to face one side of the rack frame 200 and to be coupled to one side of the rack frame 200. Specifically, the frame coupling portion 420 may be coupled to the main frame 210 described above. In this case, the frame coupling portion 420 may be formed in a plate shape. For example, the frame coupling portion 420 may be coupled to the main frame 210 located on the right side of the battery module 100 when viewed in the left-and-right direction of the rack frame 200.

That is, the plate-shaped frame coupling portion 420 may be coupled to one side of the rack frame 200 such that the portion where the nozzle 310 is connected to the fire extinguishing pipe 320 faces the battery module 100.

Accordingly, the coupling between the battery module 100 and the nozzle 310 may be easily performed and the vibration applied to the fire extinguishing agent supply module 300 may be minimized, enabling more stable control of thermal events.

Referring to FIGS. 1, 2, and 4 to 7, the frame coupling portion 420 described above may be configured to come into surface contact with one side of the rack frame 200.

That is, since the frame coupling portion 420 is formed in a plate shape to have a predetermined area, the frame coupling portion 420 may be coupled to one side of the rack frame 200 so as to come into close contact therewith. For example, the frame coupling portion 420 may be in close contact with one side of the rack frame 200, and at least a portion of the frame coupling portion 420 may be bolted to one side of the rack frame 200.

According to the above implemented configuration, the coupling between the rack frame 200 and the support module 400 may be made more stably.

In particular, the frame coupling portion 420 may be formed to extend in the up-and-down direction and may be configured such that its upper and lower ends are coupled to one side of the rack frame 200.

As described above, since the frame coupling portion 420 is in surface contact with one side of the rack frame 200, even if only the upper and lower portions thereof are fixed to one side of the rack frame 200, it may be stably fixed to the rack frame 200.

Accordingly, it is possible to minimize fastening components for coupling the support module 400 to the rack frame 200, thereby reducing work time and manufacturing costs.

Referring back to FIGS. 4 to 7, the pipe support portion 410 is configured to surround at least a portion of the fire extinguishing pipe 320.

According to the invention, the pipe support portion 410 is configured to surround the remaining outer surfaces of the fire extinguishing pipe 320, excluding the side surface thereof facing the battery module 100 (the side surface on which the nozzle 310 is provided), or is configured to surround some of the remaining outer surfaces of the fire extinguishing pipe 320, excluding the side surface thereof facing the battery module 100 (the side surface on which the nozzle 310 is provided).

For example, the pipe support portion 410 may be configured to surround the right side surface and upper surface of the fire extinguishing pipe 320 when viewed in the left-and-right direction, front-and-back direction, and up-and-down direction of the rack frame 200.

Accordingly, the pipe support portion 410 may support the fire extinguishing pipe 320 more stably, and the rigidity of the fire extinguishing agent supply module 300 may be further reinforced in the state where the support module 400 is coupled to the rack frame 200.

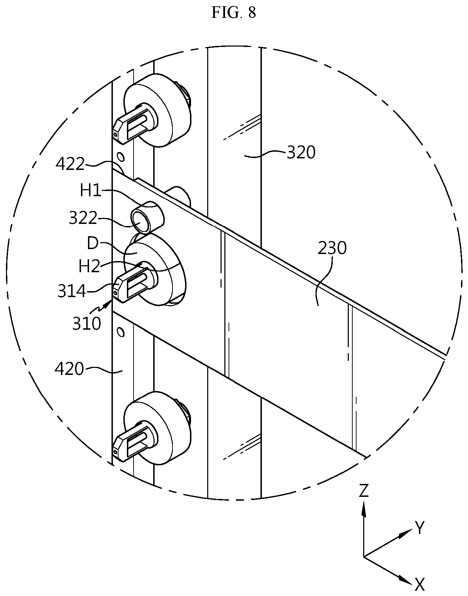

FIG. 8 is a diagram illustrating the coupling relationship between a rigid reinforcement portion 230 and a fire extinguishing agent supply module 300 provided in the battery rack in FIG. 1.

Referring back to FIGS. 1, 2, and 4 to 8, the rack frame 200 may further include a rigid reinforcement portion 230.

The rigid reinforcement portion 230 may be provided on one side of the rack frame 200 to reinforce the rigidity of the rack frame 200. Specifically, this rigid reinforcement portion 230 may connect a pair of main frames 210 in the left-and-right direction of the battery rack 10, thereby reinforcing the rigidity of the rack frame 200 in the left-and-right direction. For example, both ends of the rigid reinforcement portion 230 may be coupled to the main frame 210 when viewed in the left-and-right direction of the rack frame 200. For example, both ends of the rigid reinforcement portion 230 may be bolted to the main frame 210, but are not limited thereto.

In addition, the fire extinguishing pipe 320 may include a fixing member 322, as shown in FIGS. 4 to 6 and FIG. 8.

The fixing member 322 may protrude from the side surface of the fire extinguishing pipe 320 facing the battery module 100 and may be configured to fix the fire extinguishing pipe 320 to the rigid reinforcement portion 230. For example, the fixing member 322 may be formed by injection molding with the fire extinguishing pipe 320 when manufacturing the fire extinguishing pipe 320, or may be configured as a separate member and coupled to the fire extinguishing pipe 320.

When the support module 400 is coupled to one side of the rack frame 200, the fixing member 322 may be inserted into a first hole H1 formed in the rigid reinforcement portion 230 toward one side of the rigid reinforcement portion 230 facing the fire extinguishing pipe 320. Although not shown, the fixing member 322 inserted into the first hole H1 may be configured to be fixed to the rigid reinforcement portion 230 by a nut inserted into the fixing member 322 toward the other side of the rigid reinforcement portion 230.

According to this implemented configuration of the present invention, since the side of the fire extinguishing pipe 320 facing the battery module 100 is fixed to the rack frame 200, the rigidity of the fire extinguishing agent supply module 300 may be further reinforced in the state in which the support module 400 is coupled to the rack frame 200. Accordingly, vibration applied to the fire extinguishing agent supply module 300 may be minimized, enabling more stable control of thermal events.

In addition, the frame coupling portion 420 may include a recessed portion 422 that is partially recessed to correspond to the height of the rigid reinforcement portion 230.

This recessed portion 422, when the frame coupling portion 420 is coupled to the rack frame 200, may prevent interference between the rigid reinforcement portion 230 and the frame coupling portion 420. In this case, the ends of the frame coupling portion 420, which are located above and below the recessed portion 422, may be bolted to one side of the rack frame 200.

In addition, when the frame coupling portion 420 is coupled to the rack frame 200, one end of the rigid reinforcement portion 230 may be fitted into the recessed portion 422. This configuration may enable more stable coupling of the support module 400 to the rack frame 200, as well as reducing the cost by reducing the components of the frame coupling portion 420.

In addition, the nozzle 310 facing the rigid reinforcement portion 230 may be configured to be connected to the battery module 100 by passing through the rigid reinforcement portion 230.

Specifically, the nozzle 310 facing the rigid reinforcement portion 230, when the support module 400 is coupled to one side of the rack frame 200, may be inserted into a second hole H2 formed in the rigid reinforcement portion 230 toward one side of the rigid reinforcement portion 230 facing the fire extinguishing pipe 320. Accordingly, the nozzle 310 facing the rigid reinforcement portion 230 may be easily connected to the battery module 100 provided at a position facing the rigid reinforcement portion 230.

According to this implemented configuration, when the rigid reinforcement portion 230 is provided in the rack frame 200, interference between the rigid reinforcement portion 230 and the nozzle 310 may be prevented, and a portion of the nozzle 310 may be inserted into the rigid reinforcement portion 230, so that the rack frame 200 may support the fire extinguishing agent supply module 300 more stably.

Referring back to FIGS. 1, 2, and 4 to 8, a plurality of battery modules 100 may be provided. The plurality of battery modules 100 may be stacked in the up-and-down direction so as to be electrically connected to each other. For example, the plurality of battery modules 100 may be arranged in two rows while being stacked in the up-and-down direction inside the rack frame 200.

In addition, a plurality of nozzles 310 may be provided. The plurality of nozzles 310 may be connected to the fire extinguishing pipe 320 and may be provided along the up-and-down direction of the fire extinguishing pipe 320.

In addition, the nozzles 310 may be configured to correspond to the battery modules 100, respectively. That is, each of the plurality of nozzles 310 may be connected to each battery module 100.

According to this implemented configuration, even when a thermal event occurs in the plurality of battery modules 100, it is possible to more quickly control the thermal event.

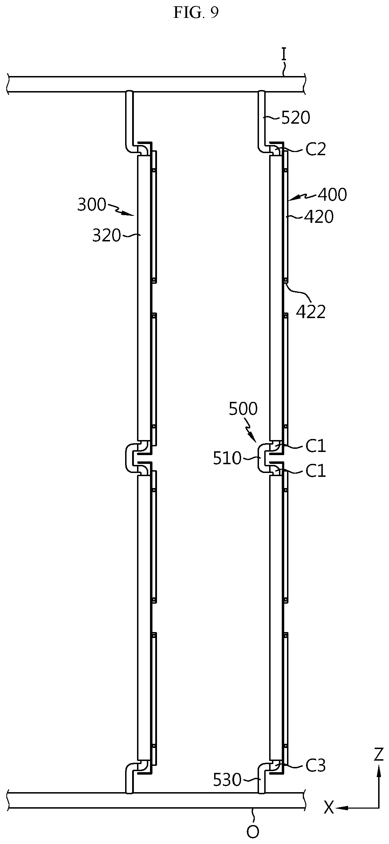

FIG. 9 is a diagram illustrating the coupling relationship between a fire extinguishing agent supply module 300 and a pipe connection member 500 provided in the battery rack 10 in FIG. 1.

Referring to FIGS. 1, 2, and 4 to 9, a plurality of battery modules 100 may be provided. In addition, at least one rack frame 200 may be provided. In addition, at least one fire extinguishing agent supply module 300 and support module 400 may be provided so as to correspond to the rack frame 200. For example, in the case where a plurality of rack frame 200 is provided, a plurality of fire extinguishing agent supply modules 300 and support modules 400 may be configured to correspond to the same. Meanwhile, the plurality of rack frames 200 may be configured to be stacked in the up-and-down direction.

In addition, the battery rack 10 may further include a pipe connection member 500. For example, the pipe connection member 500 may be configured as a flexible pipe.

This pipe connection member 500 may be configured to adjust the position of the fire extinguishing agent supply module 300 to correspond to the height of the rack frame 200 when the support module 400 is coupled to the rack frame 200.

For example, if the number of battery modules 100 constituting the battery rack 10 changes, the size of the rack frame 200 may also change corresponding thereto.

Specifically, the pipe connection member 500 may be configured to connect different fire extinguishing agent supply modules 300 disposed on one sides of the respective rack frames 200. In addition, the pipe connection member 500 may be configured to connect a supply pipe I, which supplies the fire extinguishing agent to the fire extinguishing agent supply module 300 from the outside (e.g., a fire extinguishing agent supply tank), and the fire extinguishing agent supply module 300. In addition, the pipe connection member 500 may be configured to connect a discharge pipe O, which receives the fire extinguishing agent from the fire extinguishing agent supply module 300 and discharges the same to the outside, and the fire extinguishing agent supply module 300.

For example, in the case where a plurality of rack frames 200 is provided, the supply pipe I may be provided at the top of the plurality of stacked rack frames 200. In addition, the discharge pipe O may be provided at the bottom of the plurality of stacked rack frames 200.

This pipe connection member 500 may be made of a flexible material to be adjustable in the degree of bending thereof, so that the position of the fire extinguishing agent supply module 300 may be adjusted corresponding to the changed height of the rack frame 200.

According to this implemented configuration of the present invention, the position of the fire extinguishing agent supply module 300 may be easily adjusted to correspond to the number of battery modules 100 mounted in the rack frame 200 without changing the configuration of the fire extinguishing agent supply module 300. Accordingly, the overall configuration of the battery rack 10 may be configured more compactly.

More specifically, the pipe connection member 500 may include a fire extinguishing pipe connection member 510.

The fire extinguishing pipe connection member 510 may be configured to connect different fire extinguishing agent supply modules 300 disposed on one sides of the respective rack frames 200. In this case, the plurality of rack frames 200 may be configured to be stacked in the up-and-down direction.

Specifically, the fire extinguishing pipe connection member 510 may connect different fire extinguishing pipes 320 disposed on one sides of the respective rack frames 200. In this case, the coupling between the fire extinguishing pipe connection member 510 and each fire extinguishing pipe 320 may be performed by a first connector C1. This first connector C1 may be a joint for connecting pipes.

The fire extinguishing pipe connection member 510 may be configured to adjust the degree of bending to correspond to the height of the rack frame 200 when the support module 400 is coupled to the rack frame 200.

Accordingly, in a structure in which the rack frame 200 is stacked in the up-and-down direction, the position of the fire extinguishing agent supply module 300 may be easily adjusted to correspond to the number of battery modules 100 mounted in the rack frame 200 without changing the configuration of the fire extinguishing agent supply module 300. Accordingly, the overall configuration of the battery rack 10 may be configured more compactly.

In addition, the pipe connection member 500 may further include a supply pipe connection member 520 and a discharge pipe connection member 530. In this case, a single rack frame 200 or a plurality of rack frames may be provided.

The supply pipe connection member 520 may be configured to connect the supply pipe I and the fire extinguishing agent supply module 300.

Specifically, the supply pipe connection member 520 may connect the supply pipe I and the fire extinguishing pipe 320. In this case, coupling between the supply pipe connection member 520 and the fire extinguishing pipe 320 may be performed by a second connector C2. This second connector C2 may be a joint for connecting pipes.

The discharge pipe connection member 530 may be configured to connect the discharge pipe O and the fire extinguishing agent supply module 300.

Specifically, the discharge pipe connection member 530 may connect the discharge pipe O and the fire extinguishing pipe 320. In this case, coupling between the discharge pipe connection member 530 and the fire extinguishing pipe 320 may be performed by a third connector C3. This third connector C3 may be a joint for connecting pipes.

At least one of the supply pipe connection member 520 and the discharge pipe connection member 530 may be configured to be adjustable in the degree of bending thereof, when the support module 400 is coupled to the rack frame 200, so as to correspond to the height of the rack frame 200.

Accordingly, the position of the fire extinguishing agent supply module 300 may be easily adjusted to correspond to the number of battery modules 100 mounted in the rack frame 200 without changing the configuration of the fire extinguishing agent supply module 300. Accordingly, the overall configuration of the battery rack 10 may be configured more compactly.

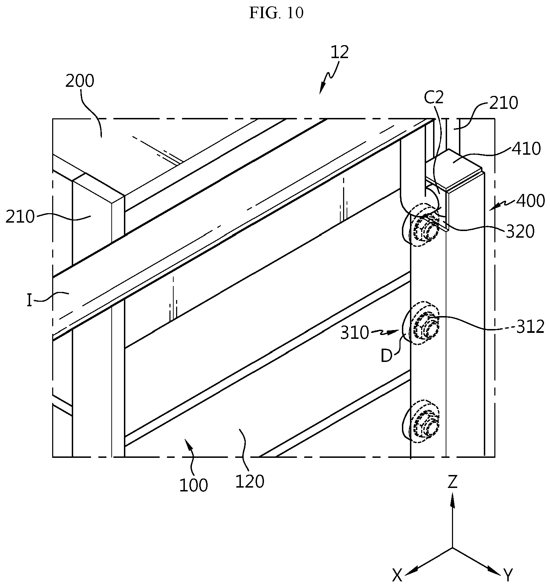

FIG. 10 is a diagram illustrating a battery rack 12 according to another embodiment of the present invention.

Since the battery rack 12 according to the present embodiment is similar to the battery rack 10 of the previous embodiment, redundant description of components that are substantially the same or similar to those of the previous embodiment will be omitted, and hereinafter, the differences therebetween will be described.

Referring to FIG. 10, in the battery rack 12, the pipe support portion 410 may be configured to surround the remaining outer surfaces of the fire extinguishing pipe 320, excluding the side surface facing the battery module 100 (the side surface provided with the nozzle 310).

Therefore, the battery rack 12 according to the present embodiment may further reinforce the rigidity of the fire extinguishing agent supply module 300 in the state in which the support module 400 is coupled to the rack frame 200 and minimize the exposure of the fire extinguishing pipe 320 to the outside.

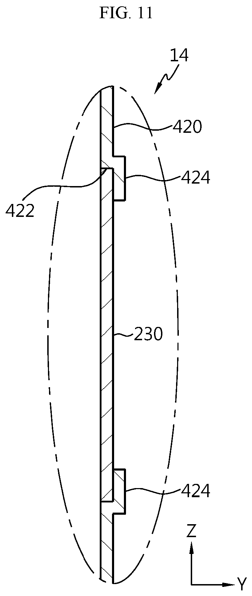

FIG. 11 is a diagram illustrating a battery rack 14 according to another embodiment of the present invention.

Since the battery rack 14 according to the present embodiment is similar to the battery rack 10 of the previous embodiment, redundant description of components that are substantially the same or similar to those of the previous embodiment will be omitted, and hereinafter, the differences therebetween will be described.

Referring to FIG. 11, in the battery rack 14, the frame coupling portion 420 of the support module 400 may further include a pair of flange portions 424.

Specifically, referring back to FIGS. 1, 4 to 6, and 8 together with FIG. 11, the flange portions 424 may be configured to be bent from the ends of the frame coupling portion 420 in the upper and lower portions of the recessed portion 422 in the outward direction of the rack frame 200. The pair of flange portions 424 may be configured to face each other in the up-and-down direction.

In this case, the flange portion 424 may be configured to come into surface contact with one end of the rigid reinforcement portion 230 when the frame coupling portion 420 is coupled to the rack frame 200. For example, the flange portion 424 may be bolted to one end of the rigid reinforcement portion 230.

With this configuration, in the battery rack 14 according to the present embodiment, the support module 400 may be more firmly coupled to the rack frame 200.

As described above, according to the embodiments of the present invention, the fire extinguishing agent is able to be discharged directly into the battery module 100, so the thermal event of the battery module 100 can be quickly suppressed.

In addition, the connection between the battery module 100 and the fire extinguishing agent supply module 300 can be easily made, enabling more stable spray of the fire extinguishing agent.

Additionally, even when strong vibrations are applied to the entire battery rack 10, 12, or 14 due to natural disasters such as earthquakes or typhoons, the fire extinguishing agent supply module 300 is ensured to withstand such vibrations, so that stable control of thermal events may be possible.

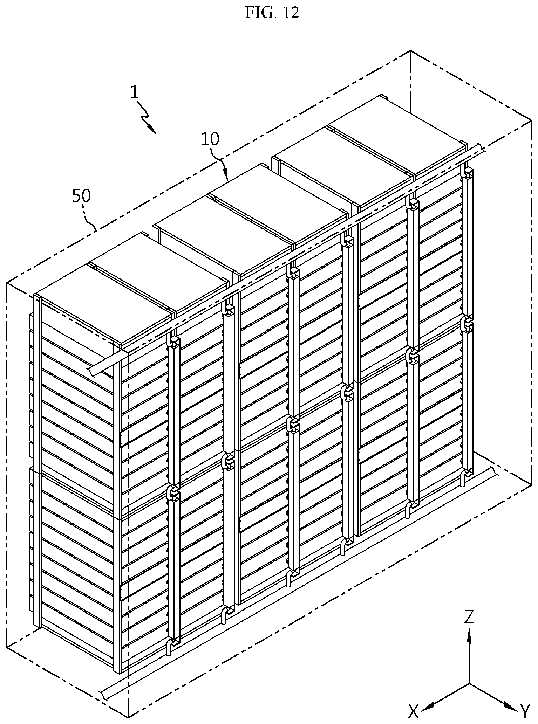

FIG. 12 is a diagram illustrating an electric power storage system 1 according to an embodiment of the present invention.

Referring to FIG. 12, the electric power storage system 1 may include at least one battery rack 10 and a rack container 50.

In an embodiment, two or more battery racks 10 may be provided.

In addition, the rack container 50 may include an accommodating space for accommodating at least one battery rack 10.

As described above, although the present invention has been described with reference to specific embodiments and drawings, the present invention is not limited thereto.

Meanwhile, although terms indicating directions such as up, down, left, right, front, and back are used in the present invention, these terms are only for convenience of explanation and It is obvious to those skilled in the art that the terms may vary depending on the location of the subject or the location of the observer.

## Claims

1. A battery rack (10) comprising:
a battery module (100);
a rack frame (200) configured to accommodate the battery module (100);
a fire extinguishing agent supply module (300) disposed on one side of the rack frame (200) and connected to the battery module (100); and
a support module (400) coupled to the one side of the rack frame (200) and configured to support the fire extinguishing agent supply module (300) such that the fire extinguishing agent supply module (300) faces the battery module (100),
wherein the fire extinguishing agent supply module (300) comprises:
a nozzle (310) connected to the battery module (100); and
a fire extinguishing pipe (320) coupled to the support module (400) and connected to the nozzle (310) to supply a fire extinguishing agent to the nozzle (310), and
wherein the support module (400) comprises:
a pipe support portion (410) configured to support the fire extinguishing pipe (320) and configured to surround the remaining outer surfaces of the fire extinguishing pipe (320) or some of the remaining outer surfaces of the fire extinguishing pipe (320), excluding a side surface of the fire extinguishing pipe (320) which faces the battery module (100) and on which the nozzle (310) is provided; and
a frame coupling portion (420) extending from one side of the pipe support portion (410) so as to face the one side of the rack frame (200) and coupled to the one side of the rack frame (200).

2. The battery rack (10) according to claim 1,
wherein the frame coupling portion (420) is configured to come into surface contact with the one side of the rack frame (200).

3. The battery rack (10) according to claim 1,
wherein the frame coupling portion (420) is formed to extend in the up-and-down direction and is configured such that the upper and lower ends thereof are coupled to the one side of the rack frame (200).

4. The battery rack (10) according to claim 1,
wherein the rack frame (200) comprises:
a rigid reinforcement portion (230) provided on the one side of the rack frame (200) so as to reinforce the rigidity of the rack frame (200), and
wherein the fire extinguishing pipe (320) comprises:
a fixing member (322) protruding from the side surface of the fire extinguishing pipe (320) facing the battery module (100) and configured to fix the fire extinguishing pipe (320) to the rigid reinforcement portion (230).

5. The battery rack (10) according to claim 4,
wherein the frame coupling portion (420) comprises:
a recessed portion (422) partially recessed to correspond to the height of the rigid reinforcement portion (230).

6. The battery rack (10) according to claim 4,
wherein the nozzle (310) facing the rigid reinforcement portion (230) is configured to be connected to the battery module (100) by passing through the rigid reinforcement portion (230).

7. The battery rack (10) according to claim 1,
wherein a plurality of battery modules (100) is provided,
wherein a plurality of nozzles (310) is provided, and
wherein the plurality of nozzles (310) is configured to respectively correspond to the plurality of battery modules (100).

8. The battery rack (10) according to claim 1,
wherein a plurality of battery modules (100) is provided,
wherein at least one rack frame (200) is provided,
wherein at least one fire extinguishing agent supply module (300) and at least one support module (400) are provided to correspond to the at least one rack frame (200), and
wherein the battery rack (10) further comprises:
a pipe connection member (500) configured to adjust the position of the fire extinguishing agent supply module (300) so as to correspond to the height of the rack frame (200) when the support module (400) is coupled to the rack frame (200).

9. The battery rack (10) according to claim 8,
wherein the pipe connection member (500) comprises:
a fire extinguishing pipe connection member (510) configured to connect different fire extinguishing agent supply modules (300) disposed on one sides of respective rack frames (200), and
wherein the fire extinguishing pipe connection member (510) is configured to be adjustable in the degree of bending to correspond to the height of the rack frame (200) when the support module (400) is coupled to the rack frame (200).

10. The battery rack (10) according to claim 8,
wherein the pipe connection member (500) further comprises:
a supply pipe connection member (520) configured to connect a supply pipe (I) that supplies a fire extinguishing agent to the fire extinguishing agent supply module (300) from the outside and the fire extinguishing agent supply module (300); and
a discharge pipe connection member (530) configured to connect a discharge pipe (O) that receives a fire extinguishing agent from the fire extinguishing agent supply module (300) and discharges the same to the outside and the fire extinguishing agent supply module (300), and
wherein at least one of the supply pipe connection member (520) and the discharge pipe connection member (530) is configured to be adjustable in the degree of bending to correspond to the height of the rack frame (200) when the support module (400) is coupled to the rack frame (200).

11. An electric power storage system (1) comprising at least one battery rack (10) according to any one of claims 1 to 10.

## Patentansprüche

1. Batterie-Rack (10), umfassend:
ein Batteriemodul (100);
einen Rack-Rahmen (200), der dazu ausgebildet ist, das Batteriemodul (100) aufzunehmen;
ein Feuerlöschmittelzuführmodul (300), das auf einer Seite des Rack-Rahmens (200) angeordnet und mit dem Batteriemodul (100) verbunden ist; und
ein Stützmodul (400), das mit der einen Seite des Rack-Rahmens (200) gekoppelt und dazu ausgebildet ist, das Feuerlöschmittelzuführmodul (300) derart zu stützen, dass das Feuerlöschmittelzuführmodul (300) dem Batteriemodul (100) zugewandt ist,
wobei das Feuerlöschmittelzuführmodul (300) umfasst:
eine Düse (310), die mit dem Batteriemodul (100) verbunden ist; und
ein Feuerlöschrohr (320), das mit dem Stützmodul (400) gekoppelt und mit der Düse (310) verbunden ist, um der Düse (310) ein Feuerlöschmittel zuzuführen, und
wobei das Stützmodul (400) umfasst:
einen Rohrstützabschnitt (410), der dazu ausgebildet ist, das Feuerlöschrohr (320) zu stützen, und dazu ausgebildet ist, die verbleibenden Außenflächen des Feuerlöschrohrs (320) oder manche der verbleibenden Außenflächen des Feuerlöschrohrs (320) zu umgeben, mit Ausnahme einer Seitenfläche des Feuerlöschrohrs (320), die dem Batteriemodul (100) zugewandt ist und auf der die Düse (310) vorgesehen ist; und
einen Rahmenkopplungsabschnitt (420), der sich von einer Seite des Rohrstützabschnitts (410) derart erstreckt, dass er der einen Seite des Rack-Rahmens (200) zugewandt ist, und mit der einen Seite des Rack-Rahmens (200) gekoppelt ist.

2. Batterie-Rack (10) nach Anspruch 1,
wobei der Rahmenkopplungsabschnitt (420) dazu ausgebildet ist, mit der einen Seite des Rack-Rahmens (200) in Flächenkontakt zu gelangen.

3. Batterie-Rack (10) nach Anspruch 1,
wobei der Rahmenkopplungsabschnitt (420) derart gebildet ist, dass er sich in der Aufwärts- und Abwärtsrichtung erstreckt, und derart ausgebildet ist, dass sein oberes und sein unteres Ende mit der einen Seite des Rack-Rahmens (200) gekoppelt sind.

4. Batterie-Rack (10) nach Anspruch 1,
wobei der Rack-Rahmen (200) umfasst:
einen starren Verstärkungsabschnitt (230), der an der einen Seite des Rack-Rahmens (200) vorgesehen ist, um die Steifigkeit des Rack-Rahmens (200) zu verstärken, und
wobei das Feuerlöschrohr (320) umfasst:
ein Befestigungselement (322), das von der dem Batteriemodul (100) zugewandten Seitenfläche des Feuerlöschrohrs (320) vorsteht und dazu ausgebildet ist, das Feuerlöschrohr (320) an dem starren Verstärkungsabschnitt (230) zu befestigen.

5. Batterie-Rack (10) nach Anspruch 4,
wobei der Rahmenkopplungsabschnitt (420) umfasst:
einen Vertiefungsabschnitt (422), der teilweise derart vertieft ist, dass er der Höhe des starren Verstärkungsabschnitts (230) entspricht.

6. Batterie-Rack (10) nach Anspruch 4,
wobei die dem starren Verstärkungsabschnitt (230) zugewandte Düse (310) dazu ausgebildet ist, durch den starren Verstärkungsabschnitt (230) hindurch mit dem Batteriemodul (100) verbunden zu sein.

7. Batterie-Rack (10) nach Anspruch 1,
wobei eine Mehrzahl von Batteriemodulen (100) vorgesehen ist,
wobei eine Mehrzahl von Düsen (310) vorgesehen ist, und
wobei die Mehrzahl von Düsen (310) dazu ausgebildet ist, jeweils einem Batteriemodul aus der Mehrzahl von Batteriemodulen (100) zu entsprechen.

8. Batterie-Rack (10) nach Anspruch 1,
wobei eine Mehrzahl von Batteriemodulen (100) vorgesehen ist,
wobei mindestens ein Rack-Rahmen (200) vorgesehen ist,
wobei mindestens ein Feuerlöschmittelzuführmodul (300) und mindestens ein Stützmodul (400) entsprechend dem mindestens einen Rack-Rahmen (200) vorgesehen sind, und
wobei das Batterie-Rack (10) ferner umfasst:
ein Rohrverbindungselement (500), das dazu ausgebildet ist, die Position des Feuerlöschmittelzuführmoduls (300) derart einzustellen, dass sie der Höhe des Rack-Rahmens (200) entspricht, wenn das Stützmodul (400) mit dem Rack-Rahmen (200) gekoppelt ist.

9. Batterie-Rack (10) nach Anspruch 8,
wobei das Rohrverbindungselement (500) umfasst:
ein Feuerlöschrohrverbindungselement (510), das dazu ausgebildet ist, verschiedene Feuerlöschmittelzuführmodule (300), die auf jeweils einer Seite jeweiliger Rack-Rahmen (200) angeordnet sind, miteinander zu verbinden, und
wobei das Feuerlöschrohrverbindungselement (510) dazu ausgebildet ist, hinsichtlich des Biegungsgrades einstellbar zu sein, um der Höhe des Rack-Rahmens (200) zu entsprechen, wenn das Stützmodul (400) mit dem Rack-Rahmen (200) gekoppelt ist.

10. Batterie-Rack (10) nach Anspruch 8,
wobei das Rohrverbindungselement (500) ferner umfasst:
ein Zufuhrrohrverbindungselement (520), das dazu ausgebildet ist, ein Zufuhrrohr (I), das dem Feuerlöschmittelzuführmodul (300) von außen ein Feuerlöschmittel zuführt, mit dem Feuerlöschmittelzuführmodul (300) zu verbinden; und
ein Abführrohrverbindungselement (530), das dazu ausgebildet ist, ein Abführrohr (O), das ein Feuerlöschmittel von dem Feuerlöschmittelzuführmodul (300) aufnimmt und dasselbe nach außen abführt, mit dem Feuerlöschmittelzuführmodul (300) zu verbinden, und
wobei mindestens eines von dem Zufuhrrohrverbindungselement (520) und dem Abführrohrverbindungselement (530) dazu ausgebildet ist, hinsichtlich des Biegungsgrades einstellbar zu sein, um der Höhe des Rack-Rahmens (200) zu entsprechen, wenn das Stützmodul (400) mit dem Rack-Rahmen (200) gekoppelt ist.

11. Elektrisches Energiespeichersystem (1), umfassend mindestens ein Batterie-Rack (10) nach einem der Ansprüche 1 bis 10.

## Revendications

1. Bâti de batterie (10) comprenant :
un module de batterie (100) ;
un cadre de bâti (200) prévu pour recevoir le module de batterie (100) ;
un module d'alimentation en agent extincteur (300) disposé sur un premier côté du cadre de bâti (200) et connecté au module de batterie (100) ; et
un module de support (400) raccordé au premier côté du cadre de bâti (200) et prévu pour supporter le module d'alimentation en agent extincteur (300), de sorte que le module d'alimentation en agent extincteur (300) fait face au module de batterie (100),
où le module d'alimentation en agent extincteur (300) comprend :
une buse (310) connectée au module de batterie (100) ; et
une conduite d'extinction (320) raccordée au module de support (400) et connectée à la buse (310) pour refouler un agent extincteur vers la buse (310), et
où le module de support (400) comprend :
une partie de support de conduite (410) prévue pour supporter la conduite d'extinction (320) et prévue pour entourer les surfaces extérieures restantes de la conduite d'extinction (320) ou
quelques-unes desdites surfaces extérieures restantes de la conduite d'extinction (320), à l'exception d'une surface latérale de la conduite d'extinction (320) faisant face au module de batterie (100) et sur laquelle la buse (310) est disposée ; et
une partie de raccordement de cadre (420) s'étendant depuis un côté de la partie de support de conduite (410) de manière à faire face au premier côté du cadre de bâti (200) et raccordée au premier côté du cadre de bâti (200).

2. Bâti de batterie (10) selon la revendication 1,
où la partie de raccordement de cadre (420) est prévue pour venir en contact de surface avec le premier côté du cadre de bâti (200).

3. Bâti de batterie (10) selon la revendication 1,
où la partie de raccordement de cadre (420) est formée de manière à s'étendre vers le haut et vers le bas et est prévue de sorte que ses extrémités supérieure et inférieure sont raccordées au premier côté du cadre de bâti (200).

4. Bâti de batterie (10) selon la revendication 1,
où le cadre de bâti (200) comprend :
une partie de renfort rigide (230) disposée sur le premier côté du cadre de bâti (200) de manière à renforcer la rigidité du cadre de bâti (200), et
où la conduite d'extinction (320) comprend :
un élément de fixation (322) faisant saillie de la surface latérale de la conduite d'extinction (320) faisant face au module de batterie (100), et prévu pour fixer la conduite d'extinction (320) à la partie de renfort rigide (230).

5. Bâti de batterie (10) selon la revendication 4,
où la partie de raccordement de cadre (420) comprend :
une partie en retrait (422) partiellement renfoncée de manière à correspondre à la hauteur de la partie de renfort rigide (230).

6. Bâti de batterie (10) selon la revendication 4,
où la buse (310) faisant face à la partie de renfort rigide (230) est prévue pour être connectée au module de batterie (100) en traversant la partie de renfort rigide (230).

7. Bâti de batterie (10) selon la revendication 1,
où une pluralité de modules de batterie (100) est prévue,
où une pluralité de buses (310) est prévue, et
où la pluralité de buses (310) est prévue de manière à correspondre à la pluralité de modules de batterie (100) respectifs.

8. Bâti de batterie (10) selon la revendication 1,
où une pluralité de modules de batterie (100) est prévue,
où au moins un cadre de bâti (200) est prévu,
où au moins un module d'alimentation en agent extincteur (300) et au moins un module de support (400) sont prévus de manière à correspondre audit au moins un cadre de bâti (200), et où ledit bâti de batterie (10) comprend en outre :
un élément de connexion de conduite (500) prévu pour ajuster la position du module d'alimentation en agent extincteur (300) de façon à correspondre à la hauteur du cadre de bâti (200) lorsque le module de support (400) est raccordé au cadre de bâti (200).

9. Bâti de batterie (10) selon la revendication 8,
où l'élément de connexion de conduite (500) comprend :
un élément de connexion de conduite d'extinction (510) prévu pour connecter différents modules d'alimentation en agent extincteur (300) disposés sur les premiers côtés de cadres de bâti respectifs (200), et
où l'élément de connexion de conduite d'extinction (510) est prévu de manière à être réglable en degré de courbure afin de correspondre à la hauteur du cadre de bâti (200) lorsque le module de support (400) est raccordé au cadre de bâti (200).

10. Bâti de batterie (10) selon la revendication 8,
où l'élément de connexion de conduite (500) comprend en outre :
un élément de connexion de conduite d'alimentation (520) prévu pour connecter une conduite d'alimentation (I) refoulant un agent extincteur vers le module d'alimentation en agent extincteur (300) depuis l'extérieur et le module d'alimentation en agent extincteur (300) ; et
un élément de connexion de conduite d'évacuation (530) prévu pour connecter une conduite d'évacuation (O) recevant un agent extincteur du module d'alimentation en agent extincteur (300) et évacuant celui-ci vers l'extérieur et le module d'alimentation en agent extincteur (300), et
où au moins un élément parmi l'élément de connexion de conduite d'alimentation (520) et l'élément de connexion de conduite d'évacuation (530) est prévu de manière à être réglable en degré de courbure afin de correspondre à la hauteur du cadre de bâti (200) lorsque le module de support (400) est raccordé au cadre de bâti (200).

11. Système de stockage d'énergie électrique (1) comprenant au moins un bâti de batterie (10) selon l'une des revendications 1 à 10.
